# EUROPEAN PATENT APPLICATION

(11) **EP 3 974 252 A1**
(43) Date of publication of application: **30.03.2022**
(21) Application number: 20819352.4
(22) Date of filing: 11.03.2020
(51) Int. Cl.: B60Q 1/04, B60Q 1/44

(54) **IN-VEHICLE NETWORK SYSTEM**

(30) Priority: 06.06.2019 JP 2019106296
(71) Applicant: MAZDA MOTOR CORPORATION, Hiroshima 730-8670 (JP)
(72) Inventor: KUROKAWA Yoshimasa, Aki-gun, Hiroshima 730-8670 (JP); YAMASHITA Tetsuhiro, Aki-gun, Hiroshima 730-8670 (JP)
(74) Representative: Frick, Robert
(86) International application number: PCT/JP2020/010526
(87) International publication number: WO 2020/246098

(57) **Abstract**

An actuator control device (12) receives an output of a travel control device (100) via a first communication path (14), and controls a body-related actuator (13) in accordance with an instruction signal output from the travel control device (100). A second communication path (15) for transmitting a predetermined signal to the actuator control device (12) is provided independently from the first communication path (14). The actuator control device (12) controls the body-related actuator (13) in accordance with the predetermined signal received via the second communication path (15) at a disturbance of a communication via the first communication path (14).

## Description

### TECHNICAL FIELD

The present disclosure relates to an on-board network system including a vehicle travel control device.

### BACKGROUND ART

There has been a known vehicle travel control device that controls a plurality of vehicle-mounted devices, for travel, mounted on a vehicle. For example, Patent Document 1 discloses, as a vehicle travel control device, a control system including device controllers controlling the respective on-board devices, a domain controller controlling the device controllers as a whole, and an integrated controller controlling the domain controllers as a whole. The control system is divided into a plurality of domains corresponding to the respective functions of the on-board devices in advance. Each of the domains is stratified into a group of the device controllers and the domain controller. The integrated controller dominates the domain controllers. In Patent Document 1, the unit controllers each calculate controlled variables of an associated one of the on-board devices, and each output control signals for achieving the controlled variables to the associated vehicle-mounted unit.

### CITATION LIST

### PATENT DOCUMENT

Patent Document 1: Japanese Unexamined Patent Publication No. 2017-61278

### SUMMARY OF THE INVENTION

### TECHNICAL PROBLEM

In recent years, development of autonomous driving systems has been promoted nationally. In general, in an autonomous driving system, cameras, for example, obtain the information on the environment outside a vehicle. An arithmetic unit calculates the route to be traveled by the vehicle based on the obtained information on the environment outside the vehicle. Based on results of this calculation, various actuators mounted in the vehicle are controlled.

In the future, integration of the control functions of the actuators into the vehicle travel control device including the arithmetic unit is expected. Such a configuration requires some backup means in case of a disturbance of the communications from the vehicle travel control device to the actuators.

The technology disclosed herein was made in view of the problem. It is an objective of the present disclosure to provide an on-board network system capable of operating body-related actuators even at a disturbance of the communications from the vehicle travel control device to the actuators.

### SUMMARY OF THE INVENTION

In order to achieve the objective, the technique disclosed herein is directed to an on-board network system including: a travel control device configured to receive an output of an on-board sensor and execute calculation for controlling travel of a vehicle; an actuator control device configured to control a body-related actuator; a first communication path for transmitting an output of the travel control device to the actuator control device; a second communication path independently from the first communication path and for transmitting a predetermined signal to the actuator control device; and the actuator control device further configured to: control the body-related actuator in accordance with an instruction signal received via the first communication path and output from the travel control device; and control the body-related actuator in accordance with the predetermined signal received via the second communication path at a disturbance of a communication via the first communication path.

The "body-related actuator" means here an actuator related to what is called vehicle equipment such as a lamp, a door, and an airbag, and does not include any actuator, such as a brake actuator, controlled while the vehicle travels.

With this configuration, the actuator control device receives the output of the travel control device via the first communication path, and controls the body-related actuator in accordance with the instruction signal output from the travel control device. In addition, the second communication path for transmitting the predetermined signal to the actuator control device is provided independently from the first communication path. At a disturbance of the communication via the first communication path, the actuator control device controls the body-related actuator in accordance with the predetermined signal received via the second communication path. This allows operation of the body-related actuator even at a disturbance of the communication from the travel control device to the body-related actuator.

In the on-vehicle network system, the body-related actuator is a stop lamp. The on-board sensor includes a brake sensor configured to detect a brake operation. The second communication path is for transmitting, as the predetermined signal, a detection signal of the brake sensor to the actuator control device, and controls a lighting operation of the stop lamp in accordance with the detection signal received from the brake sensor via the second communication path at a disturbance of a communication via the first communication path.

With this configuration, the actuator control device controls the lighting operation of the stop lamp in accordance with the detection signal of the brake sensor received via the second communication path at a disturbance of communications via the first communication path. This allows operation of the stop lamp even at a disturbance of the communications from the travel control device to the body-related actuator.

In the on-vehicle network system, the body-related actuator is a headlight. The second communication path is for transmitting, as the predetermined signal, an ignition signal to the actuator control device. The actuator control device controls a lighting operation of the headlight in accordance with the ignition signal received via the second communication path at a disturbance of a communication via the first communication path, and turns on the headlight when the ignition signal indicates an ON state, and turned off the headlight when the ignition signal indicates an OFF state.

With this configuration, the actuator control device controls the lighting operation of the headlight in accordance with the ignition signal received via the second communication path at a disturbance of communications via the first communication path. When the ignition signal indicates the ON state, the headlight is turned on. When the ignition signal indicates the OFF state, the headlight is turned off. This allows operation of the headlight even at a disturbance of the communications from the travel control device to the body-related actuator.

### ADVANTAGES OF THE INVENTION

The technique disclosed herein allows operation of body-related actuators even at a disturbance of communications from a travel control device to body-related actuators.

### BRIEF DESCRIPTION OF THE DRAWINGS

FIG. 1 schematically shows a configuration of a vehicle controlled by a vehicle travel control device according to an exemplary embodiment.
FIG. 2 is a block diagram showing a control system including the vehicle travel control device.
FIG. 3 shows a configuration example of an on-board network system according to the present embodiment.
FIG. 4 shows another configuration example of an on-board network system according to the present embodiment.

### DESCRIPTION OF EMBODIMENT

An exemplary embodiment will now be described in detail with reference to the drawings. Note that "travelling devices" in the present embodiment indicate devices such as actuators controlled while a vehicle travels.

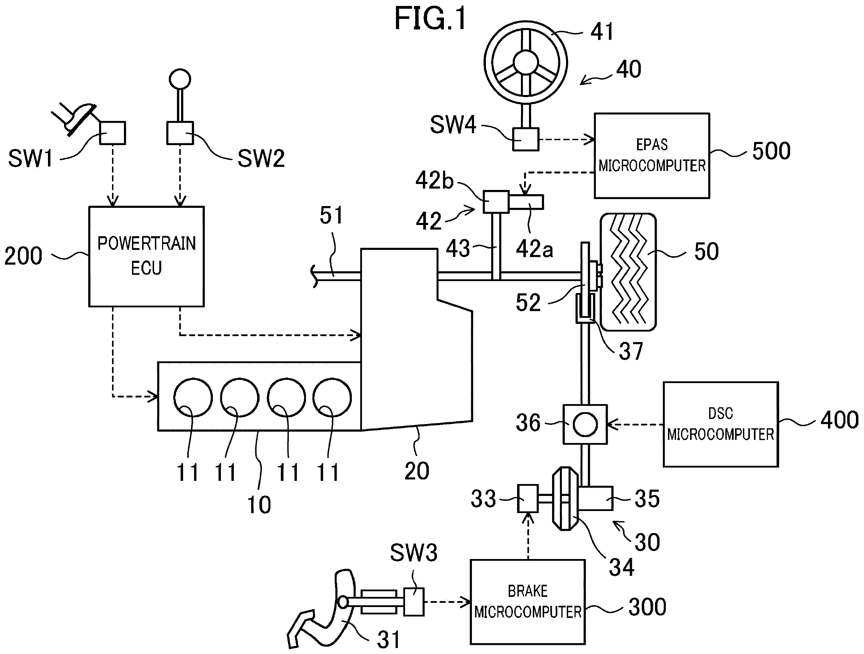

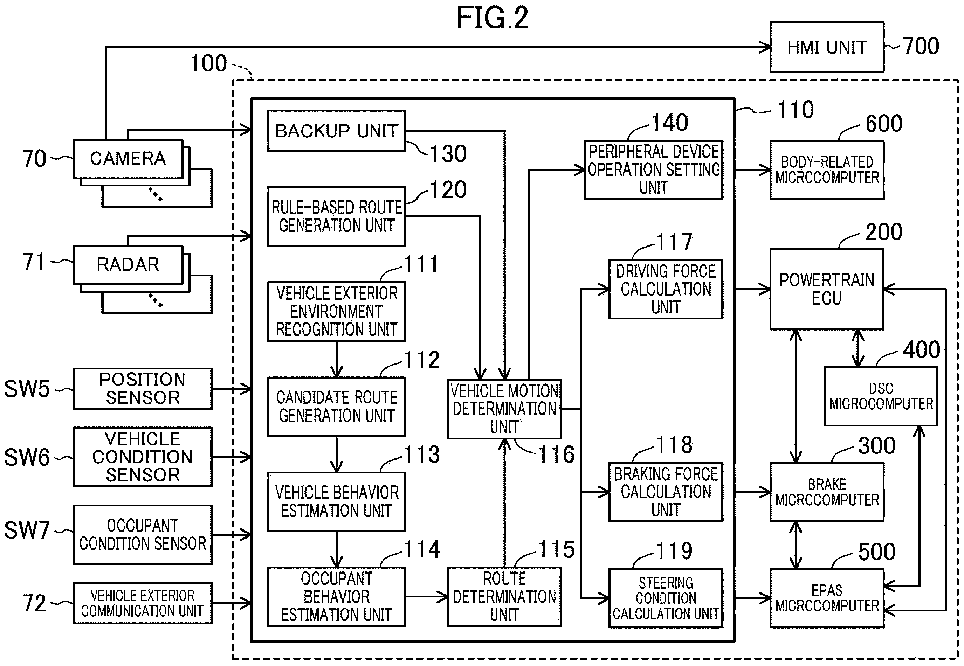

FIG. 1 schematically shows a configuration of a vehicle controlled by a vehicle travel control device 100 (hereinafter referred to as a "travel control device 100") according to the present embodiment. This vehicle is a motor vehicle that allows manual driving in which the vehicle travels in accordance with an operation of an accelerator and the like by a driver, assisted driving in which the vehicle travels while assisting an operation by the driver, and autonomous driving in which the vehicle travels without an operation by the driver. FIG. 2 is a block diagram showing a control system including the vehicle travel control device 100.

The vehicle in FIG. 1 includes an engine 10 as a drive source having a plurality of (four in FIG. 1) cylinders 11, a transmission 20 coupled to the engine 10, a brake system 30 that brakes the rotation of front wheels 50 serving as driving wheels, and a steering system 40 that steers the front wheels 50 serving as steered wheels.

The engine 10 is, for example, a gasoline engine or a diesel engine. The transmission 20 is, for example, a stepped automatic transmission. The transmission 20 is arranged on one side of the engine 10 along the cylinder bank. The transmission 20 includes an input shaft (not shown) coupled to a crankshaft (not shown) of the engine 10, and an output shaft (not shown) coupled to the input shaft via a plurality of reduction gears (not shown). The output shaft is coupled to an axle 51 of the front wheels 50. The rotation of the crankshaft of the engine 10 is changed by the transmission 20 and transmitted to the front wheels 50.

The operations of the engine 10 and the transmission 20 are controlled by a powertrain electric control unit (ECU) 200. For example, during the manual driving of the vehicle, the powertrain ECU 200 controls the amount and timing of fuel injection amount by injectors, the timing of ignition by spark plugs, timing and duration of opening intake and exhaust valves based on detection values of an accelerator position sensor SW1, for example, which detects the accelerator position corresponding to the amount of operation of the accelerator pedal by the driver. In addition, during the manual driving of the vehicle, the powertrain ECU 200 adjusts the gear stage of the transmission 20 based on the result of detection by a shift sensor SW2 and the required driving force calculated from the accelerator position. The shift sensor SW2 detects the operation of the shift lever by the driver. On the other hand, during the assisted or autonomous driving of the vehicle, the powertrain ECU 200 basically calculates the control variables of travelling devices (e.g., the injectors here) and outputs control signals to the travelling devices so as to achieve the target driving force calculated by an arithmetic unit 110 which will be described later.

The brake system 30 includes a brake pedal 31, a brake actuator 33, a booster 34 connected to the brake actuator 33, a master cylinder 35 connected to the booster 34, dynamic stability control (DSC) devices 36 that adjust the braking force, and brake pads 37 that actually brake the rotation of the front wheels 50. The axle 51 of the front wheels 50 includes disc rotors 52. The brake system 30 is an electric brake and actuates the brake actuator 33 in accordance with the operation amount of the brake pedal 31 detected by a brake sensor SW3 to actuate the brake pads 37 via the booster 34 and the master cylinder 35. The brake system 30 clamps the disc rotors 52 by the brake pads 37 to brake the rotation of each front wheel 50 by the frictional force generated between the brake pads 37 and the disc rotors 52.

The actuation of the brake system 30 is controlled by a brake microcomputer 300 and a DSC microcomputer 400. For example, during the manual driving of the vehicle, the brake microcomputer 300 controls the operation amount of the brake actuator 33 based on the values detected by the brake sensor SW3, for example, which detects the operation amount of the brake pedal 31 by the driver. In addition, the DSC microcomputer 400 controls actuation of the DSC devices 36 to add a braking force to the front wheels 50, irrespective of an operation of the brake pedal 31 by the driver. In addition, during the assisted or autonomous driving of the vehicle, the brake microcomputer 300 basically calculates the control variables of the travelling devices (e.g., the brake actuator 33 here) and outputs control signals to the travelling devices so as to achieve the target braking force calculated by the arithmetic unit 110 which will be described later.

The steering system 40 includes a steering wheel 41 to be operated by the driver, an electronic power assisted steering (EPAS) system 42 that assists the driver in a steering operation, and a pinion shaft 43 coupled to the EPAS system 42. The EPAS system 42 includes an electric motor 42a, and a deceleration device 42b configured to reduce the driving force from the electric motor 42a and transmit the force to the pinion shaft 43. The steering system 40 is a steering system of a steer-by-wire type, and actuates the EPAS system 42 in accordance with the operation amount of the steering wheel 41 detected by a steering angle sensor SW4 so as to rotate the pinion shaft 43, thereby controlling the front wheels 50. The pinion shaft 43 is coupled to the front wheels 50 through a rack bar (not shown), and the rotation of the pinion shaft 43 is transmitted to the front wheels via the rack bar.

The actuation of the steering system 40 is controlled by an EPAS microcomputer 500. For example, during the manual driving of the vehicle, the EPAS microcomputer 500 controls the operation amount of the electric motor 42a based on a detection value of the steering angle sensor SW4 or any other detector. In addition, during the assisted or autonomous driving of the vehicle, the EPAS microcomputer 500 basically calculates the control variables of the travelling devices (e.g., the EPAS system 42 here) and outputs control signals to the travelling devices so as to achieve the target steering conditions calculated by the arithmetic unit 110 which will be described later.

In the present embodiment, the travel control device 100 includes the arithmetic unit 110 that calculates the route to be traveled by the vehicle and determines motions of the vehicle for following the route so as to enable the assisted and autonomous driving. The arithmetic unit 110 is a microprocessor configured by one or more chips, and includes a CPU, a memory, and the like. Note that FIG. 2 shows a configuration to exert functions according to the present embodiment (route generating function described later), and does not necessarily show all the functions of the arithmetic unit 110.

As shown in FIG. 2, the arithmetic unit 110 determines the target motion of the vehicle based on the outputs from a plurality of sensors, for example, and controls the operation of the devices. The sensors, for example, which output the information to the arithmetic unit 110 include a plurality of cameras 70, a plurality of radars 71, a position sensor SW5, a vehicle condition sensor SW6, and an occupant condition sensor SW7. The cameras 70 are arranged on the body or other parts of the vehicle and capture images of the environment outside the vehicle. The radars 71 are arranged on the body or other parts of the vehicle and detect objects, for example, outside the vehicle. The position sensor SW5 detects the position of the vehicle (i.e., obtains vehicle position information) utilizing a global positioning system (GPS). The vehicle condition sensor SW6 includes outputs of sensors such as a vehicle speed sensor, an acceleration sensor, and a yaw rate sensor, detecting the behavior of the vehicle, and obtains the information on the conditions of the vehicle. The occupant condition sensor SW7 includes in-vehicle cameras, for example, and obtains the information on the conditions of an occupant(s). In addition, the arithmetic unit 110 receives communication information from another vehicle positioned around the subject vehicle or traffic information from a navigation system, which is received by a vehicle external communication unit 72.

The cameras 70 are arranged to image the surroundings of the vehicle at 360° in the horizontal direction. Each camera 70 captures optical images showing the environment outside the vehicle to generate image data. Each camera 70 then outputs the image data generated to the arithmetic unit 110. The cameras 70 are examples of the information acquisition unit that obtains information on the environment outside the vehicle.

The image data obtained by each camera 70 is also input to a human machine interface (HMI) unit 700, in addition to the arithmetic unit 110. The HMI unit 700 displays information based on the image data acquired, on a display device or the like in the vehicle.

Like the cameras 70, the radars 71 are arranged so that the detection range covers 360° of the vehicle in the horizontal direction. The type of the radars 71 is not particularly limited. For example, millimeter wave radars or infrared radars are applicable. The radars 71 are examples of the information acquisition unit that obtains information on the environment outside the vehicle.

During the assisted or autonomous driving, the arithmetic unit 110 sets a travel route of the vehicle and sets a target motion of the vehicle so that the vehicle follows the travel route. In order to set the target motion of the vehicle, the arithmetic unit 110 includes a vehicle external environment recognition unit 111, a candidate route generation unit 112, a vehicle behavior estimation unit 113, an occupant behavior estimation unit 114, a route determination unit 115, a vehicle motion determination unit 116, a driving force calculation unit 117, a braking force calculation unit 118, and a steering condition calculation unit 119. The vehicle external environment recognition unit 111 recognizes the environment outside the vehicle based on the outputs from the cameras 70, for example. The candidate route generation unit 112 calculates one or more candidate routes that can be traveled by the vehicle in accordance with the environment outside the vehicle recognized by the vehicle external environment recognition unit 111. The vehicle behavior estimation unit 113 estimates the behavior of the vehicle based on the outputs from the vehicle condition sensor SW6. The occupant behavior estimation unit 114 estimates the behavior of the occupant(s) of the vehicle based on the outputs from the occupant condition sensor SW7. The route determination unit 115 determines the route to be traveled by the vehicle. The vehicle motion determination unit 116 determines the target motion of the vehicle for following the route set by the route determination unit 115. The driving force calculation unit 117, the braking force calculation unit 118, and the steering condition calculation unit 119 calculate target physical amounts (e.g., a driving force, a braking force, and a steering angle) to be generated by the travelling devices in order to achieve the target motion determined by the vehicle motion determination unit 116. The candidate route generation unit 112, the vehicle behavior estimation unit 113, the occupant behavior estimation unit 114, and the route determination unit 115 constitute a route setting unit that sets the route to be traveled by the vehicle, in accordance with the external environment recognized by the vehicle external environment recognition unit 111.

In addition, the arithmetic unit 110 includes, as safety functions, a rule-based route generation unit 120 and a backup unit 130. The rule-based route generation unit 120 recognizes objects outside the vehicle under a predetermined rule, and generates the travel route avoiding the objects. The backup unit 130 generates a travel route for guiding the vehicle to a safety area such as a road shoulder.

### <Vehicle External Environment Recognition Unit>

The vehicle external environment recognition unit 111 receives the outputs of the cameras 70 and the radars 71, for example, mounted on the vehicle and recognizes the environment outside the vehicle. The environment to be recognized outside the vehicle includes at least roads and obstacles. The vehicle external environment recognition unit 111 estimates here the vehicle environment including the roads and the obstacles by comparing the three-dimensional information around the vehicle with an external environment model based on the data obtained by the cameras 70 and the radars 71. The external environment model is a learned model trained by deep learning, for example, and allows recognition of roads, obstacles, and other objects with respect to the three-dimensional information around the vehicle.

For example, the vehicle external environment recognition unit 111 specifies a free space, that is, a region without objects, from images captured by the cameras 70 through image processing. Used in this image processing is the learned model trained by deep learning, for example. Then, a two-dimensional map representing the free space is generated. In addition, the vehicle external environment recognition unit 111 obtains information on objects around the vehicle from the outputs of the radars 71. This information is positioning information indicating the positions, speeds, and other characteristics of the objects. Then, the vehicle external environment recognition unit 111 combines the generated two-dimensional map and the positioning information on the objects to generate a three-dimensional map representing the surroundings of the vehicle. Here, the information on the installation positions and the imaging directions of the cameras 70 and the information on the locations and the transmission directions of the radars 71 are used. The vehicle external environment recognition unit 111 estimates the vehicle environment including the roads and the obstacles by comparing the generated three-dimensional map with the external environment model. In the deep learning, a multilayer neural network (e.g., a deep neural network (DNN)) is used, for example. An example of the multilayer neural network is a convolutional neural network (CNN).

### <Candidate Route Generation Unit>

The candidate route generation unit 112 generates candidate routes that can be traveled by the vehicle based on the outputs from the vehicle external environment recognition unit 111, the outputs from the position sensor SW5, and information transmitted from the vehicle external communication unit 72. For example, the candidate route generation unit 112 generates the travel route avoiding the obstacles recognized by the vehicle external environment recognition unit 111 on the road recognized by the vehicle external environment recognition unit 111. The outputs of the vehicle external environment recognition unit 111 include, for example, travel road information related to the road traveled by the vehicle. The travel road information includes information on the shape of the travel road itself and information on objects on the travel road. The information related to the shape of the travel route includes the shape of the travel route (e.g., a straight line, a curve, or a curvature), the width of the travel road, the number of lanes, and the width of each lane, for example. The information related to the objects includes the positions and speeds of the objects relative to the vehicle, the attributes (e.g., the type or the moving directions) of the objects, for example. Examples of the object types include a vehicle, a pedestrian, a road, a section line, and the like.

The candidate route generation unit 112 calculates here a plurality of candidate routes by a state lattice method, and selects one or more of these candidate routes based on the respective costs for the candidate routes. However, the routes may be calculated by another method.

The candidate route generation unit 112 sets a virtual grid area on the travel road based on the travel road information. The grid area has a plurality of grid points. With the grid points, a position on the traveling road is specified. The candidate route generation unit 112 sets a predetermined grid point as a destination. Then, a plurality of candidate routes are calculated by a route search involving a plurality of grid points in the grid area. In the state lattice method, a route branches from a certain grid point to random grid points ahead in the traveling direction of the vehicle. Thus, each candidate route is set to sequentially pass through the plurality of grid points. Each candidate route includes time information indicating the time when the candidate route passes through the grid point, speed information related to the speed/acceleration, for example, at the grid point, and other information related to the vehicle motion, for example.

The candidate route generation unit 112 selects one or more travel routes from the plurality of candidate routes based on the route costs. The route costs include, for example, the degree of lane centering, the acceleration of the vehicle, the steering angle, and the possibility of a collision. If the candidate route generation unit 112 selects a plurality of travel routes, the route determination unit 115 selects one of the traveling routes.

<Vehicle Behavior Estimation Unit>

The vehicle behavior estimation unit 113 measures the conditions of the vehicle from the outputs of the sensors, such as the vehicle speed sensor, the acceleration sensor, and the yaw rate sensor, detecting the behavior of the vehicle. The vehicle behavior estimation unit 113 generates a 6DoF model of the vehicle indicating the behavior of the vehicle.

Here, the 6DoF model of the vehicle is obtained by modeling acceleration along three axes, namely, in the "forward/backward (surge)", "left/right (sway)", and "up/down (heave)" directions of the traveling vehicle, and the angular velocity along the three axes, namely, "pitch", "roll", and "yaw". That is, the 6DoF model of the vehicle is a numerical model not grasping the vehicle motion only on the plane (the forward/backward and left/right directions (i.e., the movement along the X-Y plane) and the yawing (along the Z-axis)) according to the classical vehicle motion engineering but reproducing the behavior of the vehicle using six axes in total. The six axes further include the pitching (along the Y-axis), rolling (along the X-axis) and the movement along the Z-axis (i.e., the up/down motion) of the vehicle body mounted on the four wheels with the suspension interposed therebetween.

The vehicle behavior estimation unit 113 applies the 6DoF model of the vehicle to the travel route generated by the candidate route generation unit 112 to estimate the behavior of the vehicle when following the travel route.

### <Occupant Behavior Estimation Unit>

The occupant behavior estimation unit 114 particularly estimates the driver's health conditions and emotion from the results of the detection of the occupant condition sensor SW7. Examples of the health conditions include good health condition, a low fatigue level, poor health condition, and lowering of consciousness. Examples of the emotions include fun, normal, bored, annoyed, and uncomfortable emotions.

For example, the occupant behavior estimation unit 114 extracts a face image of the driver from the images captured by the cameras placed inside the vehicle cabin, and identifies the driver. The extracted face image and information on the identified driver are provided as inputs to a human model. The human model is trained by deep learning, for example, and outputs the health conditions and the emotion of each person who may be the driver of the vehicle, from the face image. The occupant behavior estimation unit 114 outputs the health conditions and the emotions of the driver output by the human model.

In addition, if a bio-information sensor, such as a skin temperature sensor, a heartbeat sensor, a blood flow sensor, and a perspiration sensor, is employed as the occupant condition sensor SW7 for obtaining information on the driver, the occupant behavior estimation unit measures the bio-information on the driver from the outputs from the bio-information sensor. In this case, the human model uses the bio-information as the input, and outputs the health condition and the emotion of each person who may be the driver of the vehicle. The occupant behavior estimation unit 114 outputs the health conditions and the emotions of the driver output by the human model.

In addition, as the human model, a model that estimates an emotion of a human in response to the behavior of the vehicle may be used for each person who may be the driver of the vehicle. In this case, the model may be established by managing, in time sequence, the outputs of the vehicle behavior estimation unit 113, the bio-information on the driver, and the estimated emotional conditions. This model allows, for example, the relationship between changes in the driver's emotion (the degree of wakefulness) and the behavior of the vehicle to be predicted.

The occupant behavior estimation unit 114 may include a human body model as the human model. The human body model specifies, for example, the weight of the head (e.g., 5 kg) and the strength of the muscles around the neck supporting against G-forces in the front, back, left, and right directions. The human body model outputs predicted physical and subjective properties of the occupant, when a motion (acceleration G-force or jerk) of the vehicle body is input. Examples of the physical condition of the occupant include comfortable/moderate/uncomfortable conditions, and examples of the subjective viewpoint include whether a certain event is unexpected or predictable. For example, a vehicle behavior that causes the head to lean backward even slightly is uncomfortable for a passenger. Therefore, a travel route that causes the head to lean backward can be avoided by referring to the human body model. On the other hand, a vehicle behavior that causes the head of the passenger to lean forward in a bowing manner does not immediately lead to discomfort. This is because the passenger is easily able to resist such a force. Therefore, such a travel route that causes the head to lean forward may be selected. Alternatively, a target motion can be dynamically determined by referring to the human body model, so that, for example, the head of the occupant does not swing or the head of the occupant stays active.

The occupant behavior estimation unit 114 applies the human model to the vehicle behavior estimated by the vehicle behavior estimation unit 113 to estimate a change in the health conditions or the emotion of the current driver with respect to the vehicle behavior.

### <Route Determination Unit>

The route determination unit 115 determines the route to be traveled by the vehicle based on the outputs from the occupant behavior estimation unit 114. If only one route is generated by the candidate route generation unit 112, the route determination unit 115 determines this route as the route to be traveled by the vehicle. If the candidate route generation unit 112 generates a plurality of routes, a route that an occupant (in particular, the driver) feels most comfortable with, that is, a route that the driver does not perceive as a redundant route, such as a route too cautiously avoiding obstacles, is selected out of the plurality of candidate routes, in consideration of an output from the occupant behavior estimation unit 114.

### <Rule-Based Route Generation Unit>

The rule-based route generation unit 120 recognizes objects outside the vehicle in accordance with a predetermined rule based on outputs from the cameras 70 and the radars 71, without a use of deep learning, and generates a travel route avoiding such objects. Like the candidate route generation unit 112, the rule-based route generation unit 120 also calculates a plurality of candidate routes by the state lattice method, and selects one or more of these candidate routes based on the respective route costs for the candidate routes. In the rule-based route generation unit 120, the route costs are calculated, for example, under a rule of preventing the vehicle from entering an area within several meters from objects. This rule-based route generation unit 120 may also employ another technique to calculate the routes.

Information on the route generated by the rule-based route generation unit 120 is input to the vehicle motion determination unit 116.

### <Backup Unit>

The backup unit 130 generates a travel route for guiding the vehicle to a safe area, such as a road shoulder, based on outputs from the cameras 70 and the radars 71 at a malfunction of a sensor, for example, or if an occupant is not feeling well. For example, from the information given by the position sensor SW5, the backup unit 130 sets a safety area in which the vehicle can be stopped in case of emergency, and generates a travel route to reach the safety area. Like the candidate route generation unit 112, the backup unit 130 also calculates a plurality of candidate routes by the state lattice method, and selects one or more candidate routes among these candidate routes based on the respective route costs for the candidate routes. Another technique may be used for calculation of the route also in this backup unit 130.

Information of a route generated by the backup unit 130 is input to the vehicle motion determination unit 116.

### <Vehicle Motion Determination Unit>

The vehicle motion determination unit 116 determines a target motion for the travel route determined by the route determination unit 115. The target motion means steering and acceleration/deceleration for following the travel route. In addition, with reference to the 6DoF model of the vehicle, the vehicle motion determination unit 116 calculates the motion of the vehicle body for the travel route selected by the route determination unit 115.

The vehicle motion determination unit 116 determines the target motion for following the travel route generated by the rule-based route generation unit 120.

The vehicle motion determination unit 116 determines the target motion for following the travel route generated by the backup unit 130.

When the travel route determined by the route determination unit 115 significantly deviates from the traveling route generated by the rule-based route generation unit 120, the vehicle motion determination unit 116 selects the traveling route generated by the rule-based route generation unit 120 as the route to be traveled by the vehicle.

At a malfunction of sensors, for example, (in particular, the cameras 70 or the radars 71) or if the occupant is suspected to be not feeling well, the vehicle motion determination unit 116 selects the travel route generated by the backup unit 130 as the route to be traveled by the vehicle.

### <Physical Amount Calculation Unit>

A physical amount calculation unit includes the driving force calculation unit 117, the braking force calculation unit 118, and the steering condition calculation unit 119. To achieve the target motion, the driving force calculation unit 117 calculates the target driving force to be generated by the powertrain system (e.g., the engine 10 and the transmission 20). To achieve the target motion, the braking force calculation unit 118 calculates the target braking force to be generated by the brake system 30. To achieve the target motion, the steering condition calculation unit 119 calculates the target steering conditions to be generated by the steering system 40.

### <Peripheral Device Operation Setting Unit>

A peripheral device operation setting unit 140 sets operations of body-related devices of the vehicle, such as lamps and doors, based on outputs from the vehicle motion determination unit 116. The peripheral device operation setting unit 140 determines, for example, the orientations of lamps, while the vehicle follows the travel route determined by the route determination unit 115. In addition, for example, at a time of guiding the vehicle to the safety area set by the backup unit 130, the peripheral device operation setting unit 140 sets operations so that the hazard lamp is turned on and the doors are unlocked after the vehicle reaches the safety area.

### <Output Destination of Arithmetic Unit>

An arithmetic result of the arithmetic unit 110 is output to the powertrain ECU 200, the brake microcomputer 300, the EPAS microcomputer 500, and a body-related microcomputer 600. Specifically, information related to the target driving force calculated by the driving force calculation unit 117 is input to the powertrain ECU 200. Information related to the target braking force calculated by the braking force calculation unit 118 is input to the brake microcomputer 300. Information related to the target steering condition calculated by the steering condition calculation unit 119 is input to the EPAS microcomputer 500. Information related to the operations of the body-related devices set by the peripheral device operation setting unit 140 is input to the body-related microcomputer 600.

As described above, the powertrain ECU 200 basically calculates the timing of fuel injection by the injectors and the timing of ignition by the spark plugs so as to achieve the target driving force, and outputs control signals to these travelling devices. The brake microcomputer 300 basically calculates control variables of the brake actuator 33 so as to achieve the target driving force, and outputs control signals to the brake actuator 33. The EPAS microcomputer 500 basically calculates an electric current amount to be supplied to the EPAS system 42 so as to achieve the target steering condition, and outputs control signals to the EPAS system 42.

Here, in the configuration example of the travel control device 100 described above, the microcomputer functions of an actuator (e.g., the body-related microcomputer 600) are incorporated into the travel control device 100 including the arithmetic unit 110. Outputs of the body-related microcomputer 600 are transmitted to control devices such as ECUs that control the body-related actuators such as lamps, doors, and airbags provided in associated zones via an on-board network such as a controller area network (CAN). Such a configuration requires some backup means in case of a disturbance of the communications from the travel control device 100 to the actuators. However, for example, providing double communication paths from the travel control device 100 to the large number of actuators causes a complicated configuration and is thus not suitable.

To address the problem, in the present embodiment, predetermined signals are transmitted from the travel control device 100 via a communication path different from the communication path to the actuator control device that controls the body-related actuators. Accordingly, at a disturbance of the communications from the travel control device 100 to the body-related actuators, the body-related actuators can operate in accordance with the predetermined signals transmitted via the different communication path.

### <Structure Example 1>

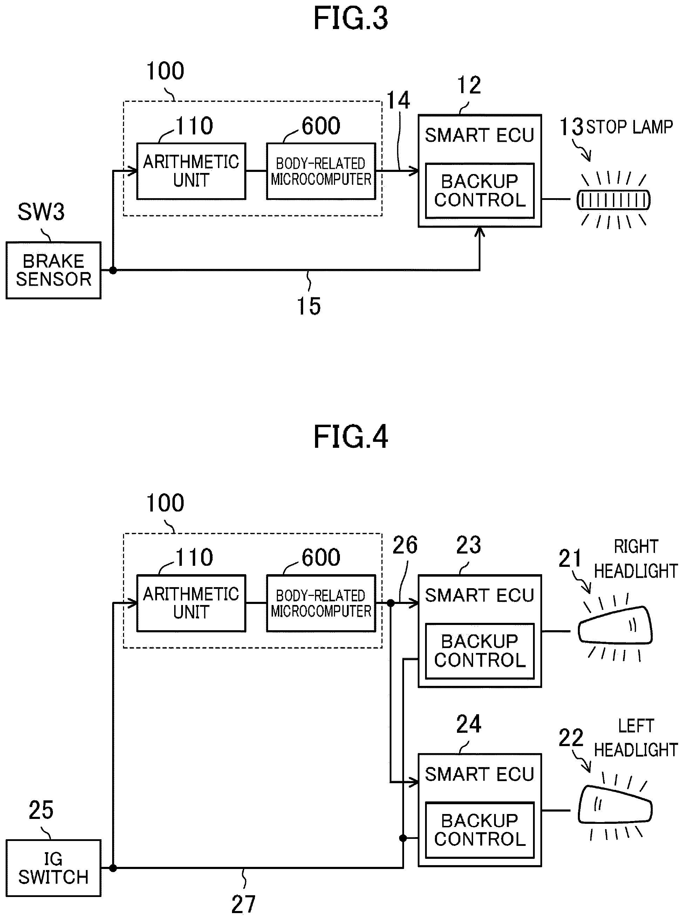

FIG. 3 shows a configuration example of the on-board network system according to the present embodiment and partially shows a configuration related to a stop lamp as an example of the body-related actuators. In the configuration shown in FIG. 3, a smart ECU 12 receives outputs from the body-related microcomputer 600 and controls the lighting operation of a stop lamp 13 in accordance with the outputs. The smart ECU 12 is an example of the actuator control device. A communication path 14 from the travel control device 100 to the smart ECU 12 is, for example, a CAN.

In addition, independently from the communication path 14 from the travel control device 100 to the smart ECU 12, a communication path 15 is provided which directly transmits the detection signals of the brake sensor SW3 to the smart ECU 12. This communication path 15 is, for example, a hard wire. The smart ECU 12 has a backup control function of controlling the lighting operation of the stop lamp 13 in accordance with the detection signals of the brake sensor SW3 received via the communication path 15 at a disturbance of the communications from the travel control device 100 to the smart ECU 12. When the backup control function is active and a signal detected by the brake sensor SW3 indicates the brake operation by the driver, the smart ECU 12 turns on the stop lamp 13.

With this configuration, the smart ECU 12 exhibits the backup control function to light the stop lamp 13 upon operation of the brake by the driver, even at a disturbance of the communications from the travel control device 100 to the smart ECU 12 for some reasons.

### <Structure Example 2>

FIG. 4 shows another configuration example of the on-board network system according to the present embodiment and partially shows a configuration related to headlights as an example of the body-related actuators. In the configuration shown in FIG. 4, a smart ECU 23 receives outputs from the body-related microcomputer 600 and controls the lighting operation of a right headlight 21 in accordance with the outputs. A smart ECU 24 receives the outputs of the body-related microcomputer 600 and controls the lighting operation of a left headlight 22 in accordance with the outputs. The smart ECUs 23 and 24 are examples of the actuator control device. A communication path 26 from the travel control device 100 to the smart ECUs 23 and 24 is, for example, a CAN.

In addition, independently from the communication path 26 from the travel control device 100 to the smart ECUs 23 and 24, a communication path 27 is provided which directly transmits ignition (IG) signals of an IG switch 25 to the smart ECUs 23 and 24. This communication path 27 is, for example, a hard wire. The smart ECUs 23 and 24 have a backup control function of controlling the lighting operation of the respective headlights in accordance with the IG signals received via the communication path 27 at a disturbance of the communications from the travel control device 100 to the smart ECUs 23 and 24. Assume that the backup control function is active. At this time, the smart ECUs 23 and 24 turn on the respective headlights 21 and 22 when the IG signal indicates the ON state, and turn off the respective headlights 21 and 22 when the IG signal indicates the OFF state.

With this configuration, the smart ECUs 23 and 24 exhibit the backup control function to light the respective headlights 21 and 22, even at a disturbance of the communications from the travel control device 100 to the smart ECUs 23 and 24 for some reasons. In addition, the driver can turn off the headlights 21 and 22 by turning off the IG switch 25.

Here, the "disturbance of the communications" includes the case where no signal is transmitted from the travel control device to the actuator control device, or the case where signals are transmitted but the contents of the signals are unclear.

As in these configuration examples, a communication system is provided, which directly controls the body-related actuators in accordance with predetermined signals separately from the communication system from the travel control device 100 to the body-related actuators, to address a disturbance of the communications from the travel control device 100 to the body-related actuators. The stop lamp and the headlights have been described above in the configuration examples of the body-related actuators. For the other body-related actuators as well, a communication system may be provided which directly controls the body-related actuators in accordance with predetermined signals separately from the communication system from the travel control device 100 to the body-related actuators.

The configuration of the travel control device 100 shown here is merely an example and is not limited to what is shown in the present embodiment. For example, the arithmetic unit 110 may exclude the rule-based route generation unit 120 or the backup unit 130. Alternatively, the functions of the arithmetic unit 110 may be divided into a plurality of semiconductor chips. Further, the travel control device may be achieved by the configuration connecting a central ECU in a central portion of the vehicle and a plurality of zone ECUs in respective zones of the vehicle via the on-board network.

The embodiment described above is merely an example in nature, and the scope of the present disclosure should not be interpreted in a limited manner. The scope of the present disclosure is defined by the appended claims, and all variations and modifications belonging to a range equivalent to the range of the claims are within the scope of the present disclosure.

### INDUSTRIAL APPLICABILITY

The technology disclosed herein is useful as an on-board network system including a vehicle travel control device.

### DESCRIPTION OF REFERENCE CHARACTERS

- 12: Smart ECU (Actuator Control Device)
- 13: Stop Lamp (Body-Related Actuator)
- 14: First Communication Path
- 15: Second Communication Path
- 21, 22: Headlight (Body-Related Actuator)
- 23, 24: Smart ECU (Actuator Control Device)
- 26: First Communication Path
- 27: Second Communication Path
- 100: Travel Control Device
- SW3: Brake Sensor

## Claims

1. An on-board network system comprising:
a travel control device configured to receive an output of an on-board sensor and execute calculation for controlling travel of a vehicle;
an actuator control device configured to control a body-related actuator;
a first communication path for transmitting an output of the travel control device to the actuator control device;
a second communication path independently from the first communication path and for transmitting a predetermined signal to the actuator control device; and
the actuator control device further configured to:
control the body-related actuator in accordance with an instruction signal received via the first communication path and output from the travel control device; and
control the body-related actuator in accordance with the predetermined signal received via the second communication path at communication disturbance of the first communication path.

2. The on-board network system of claim 1, wherein
the body-related actuator is a stop lamp, and
the on-board sensor includes a brake sensor configured to detect a brake operation, and
the second communication path is for transmitting, as the predetermined signal, a detection signal of the brake sensor to the actuator control device, and
the actuator control device controls a lighting operation of the stop lamp in accordance with the detection signal of the brake sensor received via the second communication path at communication disturbance of the first communication path.

3. The on-board network system of claim 1, wherein
the body-related actuator is a headlight, and
the second communication path is for transmitting, as the predetermined signal, an ignition signal to the actuator control device, and
the actuator control device
controls a lighting operation of the headlight in accordance with the ignition signal received via the second communication path at communication disturbance of the first communication path, and
turns on the headlight when the ignition signal indicates an ON state, and turns off the headlight when the ignition signal indicates an OFF state.
